# EUROPÄISCHE PATENTSCHRIFT

(11) **EP 0 523 278 B1**
(45) Veröffentlichungstag und Bekanntmachung des Hinweises auf die Patenterteilung: **22.11.1995**
(21) Anmeldenummer: 91112197.8
(22) Anmeldetag: 19.07.1991
(51) Int. Cl.: A47J 31/46, A47J 31/32

(54) **Espressomaschine**
Espresso coffee machine
Machine à café expresso

(43) Veröffentlichungstag der Anmeldung: 20.01.1993
(73) Patentinhaber: Eugster/Frismag AG, CH-8590 Romanshorn (CH)
(72) Erfinder: Fischer, Daniel, CH-8590 Romanshorn (CH); Eugster, Arthur, CH-8590 Romanshorn (CH)
(74) Vertreter: Grünecker, Kinkeldey, Stockmair & Schwanhäusser Anwaltssozietät

(56) Entgegenhaltungen:
- EP-A- 0 124 473
- EP-A- 0 264 352
- EP-A- 0 307 497
- DE-A- 3 035 157
- FR-A- 2 465 451

## Beschreibung

Die vorliegende Erfindung bezieht sich auf eine Espressomaschine, bei der der erforderliche Druck durch eine Luftpumpe aufgebaut wird, wie sie mit den Merkmalen des Oberbegriffes des Anspruches 1 beschrieben ist.

Aus der EP-A- 124 473 geht eine Espressomaschine mit den Merkmalen des Oberbegriffs des Anspruches 1 als bekannt hervor. Das in der Heißwasserleitung angeordnete Sperrventil dient dazu, ein Nachtropfen zu verhindern.

Aus der DE-A- 30 35 157 ist es bereits bekannt, ein Sperrventil vor dem Auslauf einer Filterkammer einer Espressomaschine einzusetzen. Dieses Sperrventil dient dazu, den Druck in der Filterkammer anzuheben.

Im Gegensatz zu Kaffemaschinen arbeiten Espressomaschinen derart, daß das Kaffeemehl mit unter Druck stehendem Heißwasser ausgelaugt wird. Der Druck wird dabei entweder durch den Dampfdruck des über Siedetemperatur erhitzten Wassers oder durch eine Pumpe aufgebaut. Üblicherweise wird bei Pumpenespressomaschinen das Kaltwasser aus einem Vorratsbehälter durch einen elektrischen Durchlauferhitzer gepumpt, der mit einem Thermostat versehen ist, welcher die Temperatur des Wassers auf einen oberen Wert begrenzt.

Bei den verschiedenen bekannten Systemen erhält man stark unterschiedliche Druck- und Temperaturprofile, unter denen das Kaffeemehl ausgelaugt wird. Der Geschmack des erhaltenen Espressos wird wesentlich durch diese Profile bestimt, da sich die in dem Kaffeemehl befindlichen verschiedensten Aromastoffe in Abhängigkeit von dem Druck und der Temperatur, sowie der Dauer, mit dem Druck und Temperatur darauf einwirken, unterschiedlich stark lösen und durch zu hohe Temperaturen auch verfälscht werden können. Außerdem wünscht man sich bei einem Espressogetränk die typische schaumige Crema, die nur unter bestimmten Bedingungen entsteht.

Der vorliegenden Erfindung liegt die Aufgabe zugrunde, eine Espressomaschine mit Pumpenantrieb anzugeben, die einfach aufgebaut ist und ein hochwertiges Espressogetränk liefert.

Diese Aufgabe wird mit den Merkmalen des Anspruchs 1 gelöst.

Die vorliegende Erfindung geht von der Erkenntnis aus, daß es bei einer Pumpenespressomaschine mit den beiden im Strömungsbereich des Heißwassers liegenden Sperrventilen auf einfache Weise möglich ist, die zur Zubereitung eines wohlschmeckenden Espressogetränks erforderlichen Temperatur- und Druckprofile im Kaffeepulver über den Zeitraum des Brühvorgangs zu erzielen. Insbesondere verhindert das vor der Kammer für das Kaffeemehl liegende Sperrventil, daß das Kaffeemehl bereits beim Aufheizen des Wassers und den dadurch bedingten Druckanstieg im Boiler, also vor dem eigentlichen Brühvorgang bereits befeuchtet wird.

Vorteilhafte Weiterbildungen ergeben sich aus den Unteransprüchen.

Anhand eines in der Zeichnung dargestellten Ausführungsbeispiels wird die Erfindung im folgenden näher erläutert. Es zeigen:
Fig. 1 die Espressomaschine in schematischer Darstellung;
Fig. 2 das elektrische Schaltbild der Espressomaschine nach Fig. 1,
Fig. 3 ein Druck-Zeit-Diagramm mit drei Kurven a, b und c, und
Fig. 4 eine vergrößerte Darstellung eines Cremaventils.

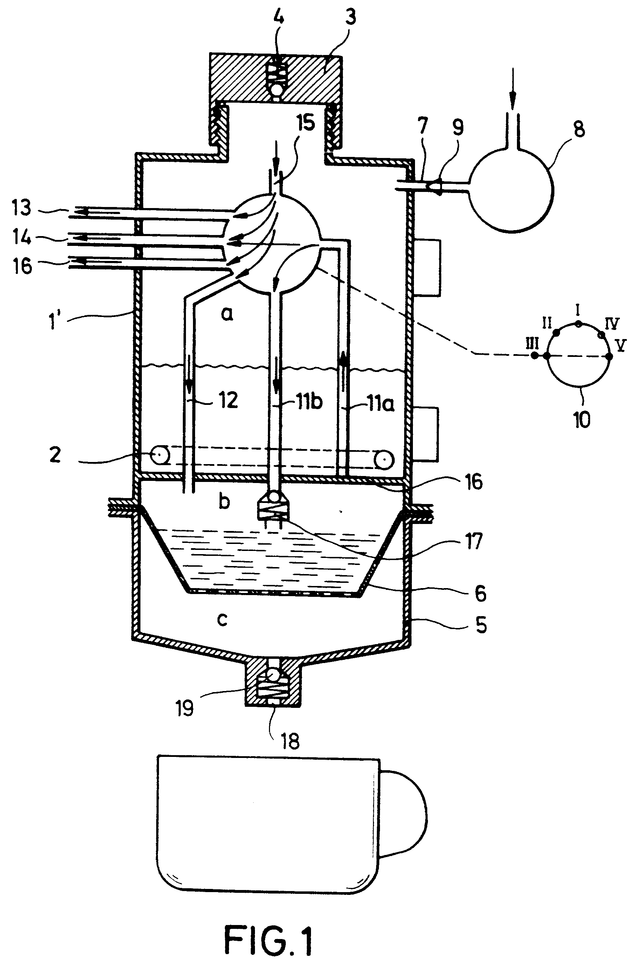

Die in Fig. 1 dargestellte Espressomaschine enthält einen Boiler 1, der in seinem unteren Bereich eine elektrische Heizung 2 aufweist, die nur schematisch dargestellt ist, weil ihre genaue Ausbildung und Anordnung hier nicht weiter interessiert. Üblicherweise ist die hier verwendete Heizung 2 in einem Bodenbereich des Boilers 1 integriert. Im oberen Bereich des Boilers 1 ist ein Deckel 3 vorgesehen, der sich auf den Boiler 1 aufschrauben läßt und ein Sicherheitsventil 4 enthält. Unter dem Boiler 1 befindet sich eine mit einem nicht näher dargestellten Handgriff versehene, abnehmbare Filterkammer 5, in der ein muldenförmiges Filtersieb 6 angeordnet ist. Die Filterkammer 5 ist mit dem Boiler 1 mit einem üblichen druckdichten Bajonettverschluß lösbar verbunden. In den oberen Bereich des Boilers 1 mündet eine Luftleitung 7, an die eine elektrisch betriebene Luftpumpe 8 angeschlossen ist. Je nach Art der verwendeten Luftpumpe 8 kann in der Luftleitung 7 noch ein Ventil 9 angeordnet sein, welches Luft nur in Richtung zum Boiler 1 durchläßt und verhindert, daß Wasser oder Dampf zur Pumpe 8 gelangt.

Im oberen Raum des Boilers 1 ist ein Mehrwegehahn 10 schematisch eingezeichnet, der für den Benutzer der Maschine von außen zugänglich ist und zwischen den einzelnen Ein- und Ausgangsleitungen jeweils nur eine Verbindung erlaubt und alle anderen Verbindungen schließt. An den Mehrwegehahn sind die folgenden Rohre angeschlossen:
- 11a: Heißwassereinlaufrohr
- 11b: Heißwasserauslaufrohr
- 12: Dampfauslaßrohr
- 13: Dampfauslaßrohr
- 14: Heißwasserauslaufrohr
- 15: Dampfeinlaßrohr
- 16: Dampfauslaßrohr

Das Heißwassereinlaufrohr 11a liegt mit seiner eingangseitigen Öffnung im untersten Teil des Boilers 1. Sowohl das Dampfauslaßrohr 13, das Heißwasserauslaufrohr 14 und das Dampfauslaßrohr 16 münden außerhalb des Boilers 1. Das Dampfauslaßrohr 13 und das Heißwasserauslaufrohr 14 können auch zu einer Leitung zusammengefaßt sein und in einer gemeinsamen Aufschäumdüse o.dgl. enden. Das Dampfauslaßrohr 16 hingegen mündet außerhalb des Boilers 1, an einer Stelle wo sich der Dampf kondensieren kann und das Kondenswasser aufgefangen wird, vorzugsweise in einer im Fußteil der Maschine unter der Abstellfläche für die Tasse, wo üblicherweise eine Auffangschale vorgesehen ist. Das Heißwasserauslaufrohr 11b ist durch die untere Wand 1a des Boilers 1 geführt und mit einem ersten Sperrventil 17 abgeschlossen, dessen Funktion weiter unten noch erläutert wird. Das Dampfauslaßrohr 12 ist ebenfalls durch die untere Wand 1a des Boilers 1 geführt und mündet wie das Heißwasserauslaufrohr 11b in der Filterkammer 5. Das Heißwasserauslaufrohr 11b und das Dampfauslaßrohr 12 können auch zu einer Leitung zusanmengefaßt sein. Das eingangseitige Ende des Dampfeinlaßrohrs 15 liegt im obersten Bereich des Boilers 1. In diesem Mehrwegehahn 10 lassen sich die folgenden mit I bis V bezeichneten Verbindungen herstellen:
- I: "Nullstellung"
Dampfeinlaßrohr 15 + Dampfauslaßrohr 16
- II: "Espresso-Ende"
Dampfeinlaßrohr 15 + Dampfauslaßrohr 12
- III: "Espresso"
Heißwassereinlaufrohr 11a + Heißwasserauslaufrohr 11b
- IV: "Externes Brühen"
Heißwassereinlaufrohr 11a + Heißwasserauslaufrohr 14
- V: "Externes Aufschäumen"
Dampfeinlaßrohr 15 + Dampfauslaßrohr 13

In Fig. 1, rechts daneben, ist der Mehrwegehahn 10 mit diesen fünf Stellungen gezeichnet. Von der obersten Nullstellung lassen sich nach rechts die Stellungen IV und V erreichen, während nach links die Stellungen II und III einschaltbar sind. Bei dieser Anordnung wird erreicht, daß man beispielsweise von der Stellung III "Espresso" in die Nullstellung I nur über die dazwischen liegende Stellung II "Espresso-Ende" gelangen kann. Diese Zusammenhänge werden weiter unten noch erläutert.

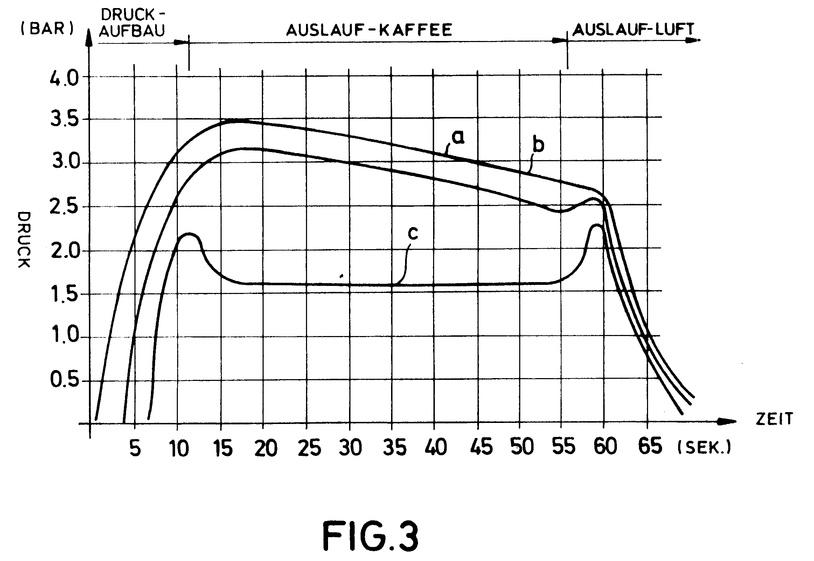

Im untersten Bereich der Filterkammer 5 ist ein Filterauslauf 18 vorgesehen, in dem ein zweites Sperrventil 19 angeordnet ist. Beide Sperrventile 17 und 19 sind auf eine bestimmte Druckdifferenz vorgespannt, d.h. sie lassen Wasser oder auch Luft bzw. Dampf nicht nur lediglich in Auslaufrichtung durch, sondern öffnen erst bei einer bestimmten Druckdifferenz zwischen ihrem Einlauf und ihrem Auslauf. Das Sperrventil 17 öffnet bei dem dargestellten Ausführungsbeispiel bei einem Druck von 1,8 bar und das zweite Sperrventil bei 2,2 bar. Das erste Druckminderventil 17 hat die zusätzliche Besonderheit, daß es eine starke Hysterese aufweist und, nachdem es bei 1,8 bar geöffnet hat, erst wieder bei 0,3 bar schließt. Damit wird ein Flattern des Ventils verhindert, das dadurch entstehen könnte, daß das Ventil sofort nach seinem Öffnen wieder schließt, wenn der Druck im Boiler 1 um ein geringes Maß abgebaut worden ist und anschließend sofort wieder öffnen muß, wenn die Luftpumpe 8 diesen geringen Druckabbau wieder aufgebaut hat. Dadurch wird auch der Druckverlust zwischen Ventileinlaß und -auslaß mit 0,3 bar klein gehalten. Weiterhin führt dieses Ventilverhalten zu einem sehr raschen Druckanstieg in der Filterkammer 5, nachdem es geöffnet hat. Der rasche Druckanstieg ist verbunden mit einem schwallartigen Einfließen von Druckwasser in den oberen Bereich b der Filterkammer 5 und einem raschen und vollständigen Durchdringen des oberhalb des Filtersiebs 6 befindlichen Kaffeemehls. Dies ist wichtig, da damit die Temperatur des Druckwassers kaum abfällt und konstant gehalten wird. Außerdem sind die beiden Sperrventile 17 und 19 so aufeinander abgestimmt, daß das Sperrventil 17 einen größeren Durchflußquerschnitt aufweist als das Sperrventil 19, um sicherzustellen, daß sich die Filterkammer 5 über das Sperrventil 17 schneller mit Brühwasser füllen kann, wie sie sich durch das Sperrventil 19 entleert. Das zweite Sperrventil öffnet erst dann, wenn der Druck im unteren Bereich c der Filterkammer 5 auf 2,2 bar angestiegen ist. Dieses Ventil 19 ist so aufgebaut, daß es diese Druckdifferenz auch im geöffneten Zustand im wesentlichen halten sollte, auch wenn ein geringer Druckabfall, wie er bei Ventilen üblich ist, nicht sehr schadet. In dem in Fig. 3 dargestellten Diagramm fällt der Druck von einem anfänglichen Öffnungsdruck von 2,2 bar auf 1,6 bar ab.

Im Boilerbereich sind noch zwei Thermostatschalter TH1 und TH2 vorgesehen, die auf die Temperatur des Wassers bzw. Dampfes im Boiler 1 ansprechen. Ihre schaltungsmäßige Funktion wird weiter unten erläutert. Der Thermostatschalter TH1 hat seinen Schaltpunkt bei etwa 90 bis 95°, während der Schaltpunkt des Thermostatschalters TH2 bei etwa 130° C bis 140° C liegt. Beide Schalter habe eine übliche Hysterese von etwa 5%, d.h., daß ein solcher Schalter bei beispielsweise 95° C ausschaltet und erst bei etwa 90° C wieder einschaltet, nachdem er ausgeschaltet hatte.

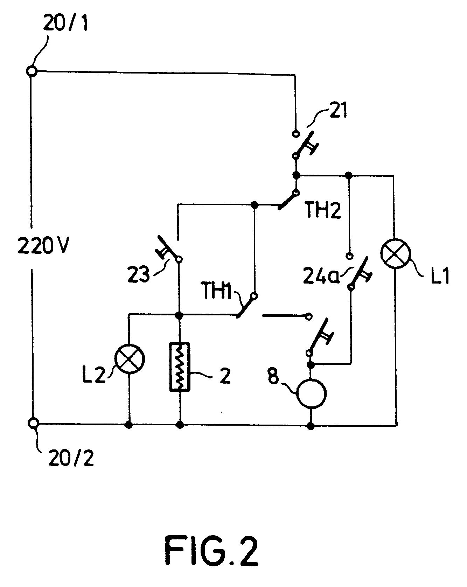

Fig. 2 ist das Schaltschema der in Fig. 1 dargestellten Espressomaschine. Die Stromversorgungseingangsklemmen, üblicherweise 220 V Wechselspannung, sind mit 20/1 und 20/2 bezeichnet. An der Eingangsklemme 20/1 liegt ein Netzschalter 21, der eine Lampe L1 mit Strom versorgt. Diese Lampe L1 zeigt den Einschaltzustand der Maschine an. Parallel zur Lampe L1 liegt über die Reihenschaltung aus den beiden Thermostatschaltern TH1 und TH2 die Heizung 2. Die Heizung 2 wird also nur dann mit Strom versorgt, wenn sich beide Thermostatschalter TH1 und TH2 in der gezeichneten Stellung befinden, die Temperatur also bei der oben angegebenen Dimensionierung der beiden Thermostatschalter unter 95° C liegt. Parallel zur Heizung 2 liegt eine Lampe 22. Sie leuchtet, wenn die Heizung 2 an Spannung liegt, was bedeutet, daß die Brühtemperatur bzw. Dampftemperatur noch nicht erreicht ist. Parallel zu dem Thermostatschalter TH1 liegt ein Dampfschalter 23. Die Pumpe 8 ist über einen separaten Pumpenschalter 24 mit demjenigen Schaltkontakt des Thermostatschalters TH1 verbunden, den der Schalter im heißen Zustand einnimmt. Mit einem weiteren Pumpenschalter 24a kann die Pumpe 8 unabhängig vom Thermostatschalter TH1 betätigt werden.

Im folgenden wird die Funktionsweise der Espressomaschine erläutert.

Bei abgeschraubtem Deckel 3 wird diejenige Menge Wasser in den Boiler 1 eingefüllt, die voraussichtlich für den nachfolgenden Betrieb benötigt wird. Die Wassermenge ist nicht kritisch, da der Brühvorgang, beispielsweise bei einem drohenden Überlauf der unter dem Auslauf stehenden Espressotasse jederzeit unterbrechbar ist. Es sollte lediglich darauf geachtet werden, daß der Boiler 1 nicht randvoll mit Wasser gefüllt wird, weil sonst eventuell kein ausreichendes Druckluftvolumen zur Verfügung steht. Der Deckel 3 wird dann geschlossen und die Maschine ist nach Einschalten des Netzschalters 21 betriebsbereit. Wie man aus dem Schaltbild nach Fig. 2 ersieht, wird mit Einschalten des Netzschalters 21 bei noch kalter Maschine die Heizung 2 sofort unter Strom gesetzt und die Lampe L2 leuchtet. Solange das Wasser im Boiler 1 unter 95° C liegt, sind die beiden Thermostatschalter TH1 und TH2 in der gezeichneten linken Stellung. Die Pumpe 8 ist außer Betrieb. Das Wasser heizt sich nun kontinuierlich auf, bis es eine Temperatur von 95° C erreicht. Bei dieser Temperatur schaltet der Thermostatschalter TH1 in seine rechte Stellung und die Lampe L2 erlischt und zeigt damit an, daß die Maschine für die weiteren Betriebsstufen bereit ist. Je nachdem ob man zunächst Espresso zubereiten will oder eventuell Milch erhitzen bzw. aufschäumen möchte, wird der mit dem Mehrwegehahn 10 in Verbindung stehende Betriebswahlschalter in eine der Stellungen II bis IV gebracht.

Betrachten wir zunächst den Betrieb III "Espresso". In dieser Stellung verbindet der Mehrwegehahn 10 das Heißwassereinlaufrohr 11a mit dem Heißwasserauslaufrohr 11b. In dieser Stellung III ist auch der Pumpenschalter 24 einschaltet. Die Pumpe 8 läuft aber nur dann, wenn sich der Thermostatschalter TH1 in seiner rechten Stellung befindet, das Wasser im Boiler 1 also bereits 95° C erreicht hat. Damit wird verhindert, daß die Pumpe 8 bereits in Funktion tritt, bevor die Brühtemperatur erreicht wurde. Damit die Pumpe 8 nicht bereits bei einem geringen Temperaturabfall wieder abschaltet, ist der Temperaturschalter TH1 mit einer Hysterese ausgebildet und schaltet erst bei einem Temperaturabfall von 5° C (95° C AUS - 90° C EIN) wieder zurück. Solange der Druck im Boiler 1 unter dem Öffnungsdruck des Sperrventils 17 liegt, bleibt die Filterkammer 5 drucklos. Erst wenn der Druck im Boiler 1 auf 1,8 bar angestiegen ist, wird Heißwasser durch das Heißwasserrohr 11a, 11b und das Sperrventil 17 gedrückt. Da dieses Sperrventil 17 Hystereseeigenschaften hat und nach dem Öffnen bei 1,8 bar nur noch eine Druckdifferenz von 0,3 bar hält, steigt der Druck in der Filterkammer 3 sehr rasch an und das Kaffeemehl wird sehr schnell vollständig benetzt und auf Brühtemperatur gebracht. Erst wenn der Druck in dem Bereich c der Filterkammer 5 unter dem Filtersieb 6 auf den Öffnungsdruck des Sperrventils 19 angestiegen ist, öffnet dieses Ventil 19 und gibt Espresso über den Auslauf 18 frei. Dieser Vorgang wird über etwa 50 sec aufrechterhalten. In dem in Fig. 3 dargestellten Diagramm ist der geschilderte Zusammenhang gut sichtbar. Dabei zeigen:
- a -: den Druck im Boiler 1,
- b -: den Druck in der Filterkammer 5 über dem Filtersieb 6, und
- c -: den Druck in der Filterkammer 5 unter dem Filtersieb 6

Die Druckdifferenz zwischen den Kurven b und c ist darauf zurückzuführen, daß das befeuchtete Kaffeemehl als Drosselstelle wirkt. In dem Diagramm gibt die Kurve b die Hysterese des Sperrventils 17 sehr anschaulich wieder. Das Sperrventil 17 öffnet erstmals nach ca. 5 sec bei 1,8 bar und hält anschließend nur noch eine Druckdifferenz von 0,3 bar aufrecht. Das führt dazu, daß sich schwallartig relativ viel Brühwasser auf das Kaffeemehl ergießt, wodurch sichergestellt wird, daß das Kaffeemehl nicht nur lokal, sondern auf der gesamten Fläche benetzt wird. Außerdem baut sich dadurch der Druck in der Filterkammer 5 rasch auf und es entstehen in den feinen Strömungskanälen im Kaffeemehl beträchtliche Strömungsgeschwindigkeiten, die zu einem guten Auslaugen bzw. Ausschwemmen beitragen.

Nachdem die gewünschte Menge Espresso gebrüht worden ist, wird der Wahlschalter am Mehrfachhahn 10 von der Stellung III in die Stellung II "Espresse-Ende" zurückgeschaltet. In dem Diagramm in Fig. 3 erfolgt das etwa zum Zeitpunkt von 55 sec. In diesem Zustand II ist das Dampfeinlaßrohr 15 mit dem Dampfauslaßrohr 12 verbunden, d.h. es strömt nicht mehr Heißwasser durch das Kaffeemehl, sondern heiße Luft bzw. Dampf. Nachdem in dieser Leitungsverbindung kein dem Sperrventil 17 entsprechendes Ventil liegt, steigt der Druck in der Filterkammer 5 sehr schnell auf den Druck im Boiler 1 an. Da Luft bzw. Dampf gegenüber Wasser sehr viel schneller durch das Kaffeemehl gedrückt wird, baut sich dieser Druck auch rasch im Bereich unter dem Filtersieb 6 auf und der Gesamtdruck im Boiler 1 wird entsprechend rasch abgebaut. Dieses Betriebsverhalten führt dazu, daß das Kaffeemehl am Ende des Brühvorgangs nochmals stoßartig ausgeschwemmt wird und durch den Dampf bzw. die Luft aufgeschäumt wird. Damit wird eine sehr starke Cremabildung erreicht, die dem Espresso nicht nur eine zusätzliche Geschmacksnuance, sondern ihm auch eine starke Schaumschicht verleiht. Außerdem wird das Kaffeemehl durch den Luftdurchsatz praktisch getrocknet, was die spätere Entsorgung wesentlich vereinfacht. Bei der oben angesprochenen Ausbildung des Mehrwegehahns 10 wird dieser Prozeß zwangsläufig durchgeführt, wenn man von der Stellung III in die Nullstellung I zurückgeht. Sollte der Benutzer nur sehr kurz in der Zwischenstellung II verbleiben und der Überdruck im Boiler 1 noch nicht vollständig abgebaut sein, sorgt die Nullstellung I dafür, daß noch überschüssiger Druck über das Dampfauslaßrohr in die Wasserauffangschale abgeleitet wird.

Wenden wir uns nun den zusätzlichen Schaltstellungen IV und V zu. Die Schaltstellung IV nimmt eine Besonderheit insofern ein, als über sie erreicht wird, daß Brühwasser durch das Heißwassereinlaufrohr 11a und das zweite Heißwasserauslaufrohr 14 gefördert wird. Man verwendet diese Betriebsart beispielsweise dazu, um Heißwasser in begrenzten Mengen zuzubereiten, beispielsweise um Teeblätter zu überbrühen. Für die Espressozubereitung wird diese Betriebsstellung normalerweise nicht benötigt, es sei dann, man möchte den bereits zubereiteten Espresso mit Heißwasser verdünnen oder kalte Milch mit Heißwasser erwärmen. In der Schaltstellung IV wird der zweite Pumpenschalter 24a geschlossen, der der Reihenschaltung aus dem Pumpenschalter 24 und dem Thermostat TH1 parallel geschaltet ist. Um kalte Milch zu erwärmen oder aufzuschäumen bedient man sich üblicherweise der Betriebsstellung V. In dieser Betriebsstellung wird aus dem Dampfauslaßrohr 13 Dampf ausgestoßen. Dazu wird der in dem Schaltbild nach Fig. 2 ersichtliche Dampfschalter 23, der mit dem Mehrwegehahn 10 zwangsgekoppelt sein kann, geschlossen. Stellt man diese Betriebsart im noch kalten Zustand der Maschine bereits ein, wird das Wasser zunächst durch die Heizung 2 aufgeheizt. Bevor das Wasser siedet, passiert noch nichts. Die Heizung 2 bleibt auch dann noch unter Spannungsversorgung, wenn der Thermostatschalter TH1 in seine rechte Stellung (über 95° C) übergegangen ist, weil die Heizung dann noch über den Thermostatschalter TH2 und den Dampfschalter 23 mit Spannung versorgt wird. Der Betrieb der Heizung 2 wird durch die Lampe L2 angezeigt. Sobald das Wasser siedet, baut sich im Boiler 1 Druck auf und es wird Dampf abgegeben. Die Pumpe 8 wird in dieser Betriebsart nicht betätigt. Die Leistung der Heizung ist bezüglich dem Durchlaßquerschnitt des Dampfauslaßrohrs 13 so dimensioniert, daß die Temperatur des Wassers im Boiler trotz geöffnetem Dampfauslaßrohr 13 ansteigen kann, so daß die Dampftemperatur bei längerem Betrieb bis auf die Temperatur von 140° C ansteigen kann, bei der der Thermostatschalter TH2 öffnet. Damit kann ein sehr starkes Aufschäumen von Milch erreicht werden.

Der im Boiler 1 befindliche Druck wird bei Zurückschalten der Maschine auf die Nullstellung I wie beim Ende der Espressozubereitung über das Dampfauslaßrohr 16 in der Auffangschale abgebaut. Damit steht die Maschine sehr schnell wieder zum Befüllen zur Verfügung. Eine sofortige neue Befüllung könnte dann erforderlich sein, wenn man mit so wenig Wasser gearbeitet haben sollte, daß es für den Arbeitsvorgang nicht ausgereicht haben sollte.

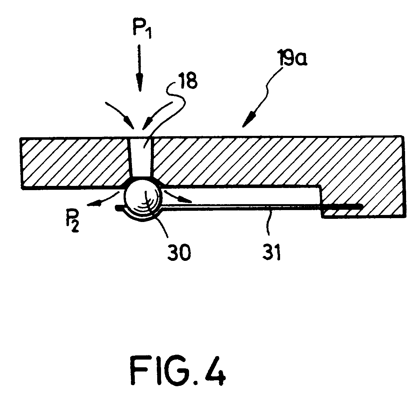

Auch wenn mit der beschriebenen Espressomaschine durch den sich automatisch einstellenden Arbeitsablauf ohne weitere Vorkehrungen eine gute Chremabildung erreicht wird, kann sie durch eine besondere Formgebung des Sperrventils 19 noch verbessert werden. Das in Fig. 4 dargestellte Sperrventil 19a weist eine den Durchlaß 18 abdichtende Kugel 30 auf, die durch eine Blattfeder 31 vorgespannt ist. Der Auslaßbereich des Durchlasses 18 weist eine konische Sitzfläche auf, die einen so großen Öffnungwinkel hat, daß die Kugel 30 ganz in diesen Konus eintritt und in linienförmiger Berührung an der Übergangsstelle zwischen diesem Konus und dem oberen Teil der Bohrung anliegt. Sobald der Druck p1 gegenüber dem Außendruck p2 entsprechend hoch angestiegen ist, daß das Ventil öffnet, muß das Espressogetränk an der Kugel 30 vorbei einen relativ engen Ringkanal durchströmen und erfährt danach eine sofortige Entspannung auf dem äußeren Luftdruck. Dadurch entsteht eine nochmalige Aufschäumung bzw. Cremabildung.

## Patentansprüche

1. Espressomaschine, mit einem Boiler (1) und einer dem Boiler zugeordneten elektrischen Heizung (2), einer mit dem Boiler (1) über eine Heißwasserleitung (11) verbundenen Filterkammer (5), die einen Auslauf (18) aufweist und durch ein eingesetztes Sieb (6) in zwei Kammerbereiche (b, c) unterteilt ist, einem auf die Temperatur im Boiler (1) ansprechenden Thermostatschalter (TH1), der mit der Heizung (2) in Reihe geschaltet ist, um die Temperatur im Boiler auf einen vorgegebenen oberen Wert zu begrenzen, einer auf den Boiler wirkenden Luftpumpe (8), und einem in der Heißwasserleitung (11) liegenden Sperrventil (17), **dadurch gekennzeichnet,** daß vor dem Auslauf der Filterkammer (5) ein zweites Sperrventil (19) angeordnet ist, wobei die Sperrventile (17, 19) bei vorgegebenen Druckunterschieden zwischen ihren Ein- und Auslässen öffnen.

2. Espressomaschine nach Anspruch 1, **dadurch gekennzeichnet,** daß der Thermostatschalter (TH1) derart ausgebildet ist, daß er bei einer Temperatur im Boiler (1) von 95° C öffnet.

3. Espressomaschine nach Anspruch 2, **dadurch gekennzeichnet,** daß der Thermostatschalter (TH1) derart ausgebildet ist, daß er nach dem Öffnen bei einer Temperatur wieder schließt, die etwa 5% niedriger liegt als die Temperatur beim Öffnen.

4. Espressomaschine nach einem der Ansprüche 1 bis 3, **dadurch gekennzeichnet,** daß das erste Sperrventil (17) derart ausgebildet ist, daß es bei einer Druckdifferenz von etwa 1,8 bar öffnet.

5. Espressomaschine nach wenigstens einem der Ansprüche 1 bis 4, **dadurch gekennzeichnet,** daß das erste Sperrventil (17) derart ausgebildet ist, daß es nach dem Öffnen mit einer Druckdifferenz von ca. 20 % der Druckdifferenz beim Öffnen geöffnet bleibt.

6. Espressomaschine nach wenigstens einem der Ansprüche 1 bis 4, **dadurch gekennzeichnet,** daß das zweite Sperrventil (19) bei einer Druckdifferenz von etwa 2,2 bar öffnet und diese Druckdifferenz im geöffneten Zustand im wesentlichen aufrechterhält.

7. Espressomaschine nach wenigstens einem der Ansprüche 1 bis 5, **gekennzeichnet durch** einen in der Heißwasserleitung (11) liegenden Mehrwegehahn (10), mit dem die Heißwasserleitung absperrbar ist und eine den oberen Boilerraum mit einem Dampfauslaß (5) verbindende Leitung (11) freigebbar ist.

8. Espressomaschine nach Anspruch 6, **gekennzeichnet durch** einen zweiten Thermostatschalter (TH 2), der den ersten Thermostatschalter (TH 1) im Betrieb "Dampfauslaß" ersetzt und der derart ausgebildet ist, daß er die Temperatur im Boiler (1) auf einen Wert von etwa 130^{o} C begrenzt.

## Claims

1. Expresso machine having a boiler (1) and an electric heating element (2) assigned to the boiler, having a filter chamber (5) which is connected to the boiler (1) via a hot-water line (11), exhibits an outflow (18) and is subdivided into two chamber regions (b, c) by an inserted strainer (6), having a thermostat switch (TH1) which reacts to the temperature in the boiler (1) and is connected in series with the heating element (2), in order to limit the temperature in the boiler to a predetermined upper value, having an air pump (8) acting on the boiler, and having a shut-off valve (17) located in the hot-water line (11), characterized in that a second shut-off valve (19) is arranged upstream of the outflow of the filter chamber (5), the shut-off valves (17, 19) opening at predetermined pressure differences between their inlets and outlets.

2. Expresso machine according to Claim 1, characterized in that the thermostat switch (TH1) is designed such that it opens at a temperature in the boiler (1) of 95°C.

3. Expresso machine according to Claim 2, characterized in that the thermostat switch (TH1) is designed such that, after opening, it closes again at a temperature which is approximately 5% lower than the temperature upon opening.

4. Expresso machine according to one of Claims 1 to 3, characterized in that the first shut-off valve (17) is designed such that it opens at a pressure difference of approximately 1.8 bar.

5. Expresso machine according to at least one of Claims 1 to 4, characterized in that the first shut-off valve (17) is designed such that, after opening, it remains open with a pressure difference of approximately 20% of the pressure difference upon opening.

6. Expresso machine according to at least one of Claims 1 to 4, characterized in that the second shut-off valve (19) opens at a pressure difference of approximately 2.2 bar and essentially maintains this pressure difference in the open state.

7. Expresso machine according to at least one of Claims 1 to 5, characterized by a multiway valve (10) which is located in the hot-water line (11) and by means of which the hot-water line can be shut off and a line (11) connecting the upper boiler space to a steam outlet (5) can be released.

8. Expresso machine according to Claim 6, characterized by a second thermostat switch (TH2) which replaces the first thermostat switch (TH1) in "steam outlet" operation and is designed such that it limits the temperature in the boiler (1) to a value of approximately 130°C.

## Revendications

1. Machine à café expresso, avec un chauffe-eau (1) et un chauffage (2) électrique affecté au chauffe-eau, une chambre à filtre (5) reliée au chauffe-eau (1) par une conduite d'eau chaude (11), qui présente une sortie (18) et est subdivisée en deux zones de chambre (b, c) par un tamis (6) inséré, un interrupteur thermostatique (TH1) réagissant à la température dans le chauffe-eau (1) et branché en série avec le chauffage (2), pour limiter la température dans le chauffe-eau à une valeur supérieure prédéterminée, une pompe à air (8) agissant sur le chauffe-eau, et un clapet antiretour (17) situé dans la conduite d'eau chaude (11), caractérisée en ce qu'un deuxième clapet antiretour (19) est disposé avant la sortie de la chambre à filtre (5), les clapets antiretour (17, 19) ouvrant en cas de différences de pression prédéfinies entre leurs entrées et sorties.

2. Machine à café expresso selon la revendication 1, caractérisé en ce que l'interrupteur thermostatique (TH1) est conçu de telle façon qu'il ouvre à une température dans le chauffe-eau (1) de 95 °C.

3. Machine à café expresso selon la revendication 2, caractérisée en ce que l'interrupteur thermostatique (TH1) est conçu de telle façon qu'il se referme après l'ouverture à une température qui est environ 5% inférieure à la température lors de l'ouverture.

4. Machine à café expresso selon l'une quelconque des revendications 1 à 3, caractérisée en ce que le premier clapet antiretour (17) est conçu de telle façon qu'il s'ouvre avec une différence de pression d'environ 1,8 bars.

5. Machine à café expresso selon au moins l'une quelconque des revendications 1 à 4, caractérisée en ce que le premier clapet antiretour (17) est conçu de telle façon qu'il reste ouvert après l'ouverture avec une différence de pression égale à environ 20% de la différence de pression lors de l'ouverture.

6. Machine à café expresso selon au moins l'une quelconque des revendications 1 à 4, caractérisée en ce que le deuxième clapet antiretour (19) s'ouvre avec une différence de pression d'environ 2,2 bars et maintient sensiblement cette différence de pression à l'état ouvert.

7. Machine à café expresso selon au moins l'une des revendications 1 à 5, caractérisée par un robinet à plusieurs voies (10) situé dans la conduite d'eau chaude (11), avec lequel on peut fermer la conduite d'eau chaude et débloquer une conduite (11) reliant le compartiment supérieur du chauffe-eau à une sortie de vapeur (5).

8. Machine à café expresso selon la revendication 6, caractérisée par un deuxième interrupteur thermostatique (TH 2) qui remplace le premier interrupteur thermostatique (TH 1) en service " sortie de vapeur " et est conçu de telle façon qu'il limite la température dans le chauffe-eau (1) à une valeur d'environ 130 °C.
